# EUROPÄISCHE PATENTSCHRIFT

(11) **EP 1 537 397 B1**
(45) Veröffentlichungstag und Bekanntmachung des Hinweises auf die Patenterteilung: **18.04.2007**
(21) Anmeldenummer: 03765092.6
(22) Anmeldetag: 22.07.2003
(51) Int. Cl.: G01L 17/00, G01M 17/02, B60C 23/00

(54) **Verfahren zur Luftdruckkontrolle von luftbereiften Fahrzeugrädern**
Method of checking air pressure in vehicle wheels with pneumatic tires
Méthode de contrôle de la pression de gonflage d'un pneumatique de véhicule

(30) Priorität: 23.07.2002 DE 10233534
(43) Veröffentlichungstag der Anmeldung: 08.06.2005
(73) Patentinhaber: Inmess Gesellschaft für Industrie- und Messtechnik mbH, 64521 Gross-Gerau (DE)
(72) Erfinder: MOTZKUS, Andreas, 55276 Oppenheim (DE); NEUMANN, Erwin, 64521 Gross-Gerau (DE); SCHRAUDOLF, Siegfried, 64404 Bickenbach (DE)
(74) Vertreter: Katscher Habermann Patentanwälte
(86) Internationale Anmeldenummer: PCT/EP2003/008002
(87) Internationale Veröffentlichungsnummer: WO 2004/010095

(56) Entgegenhaltungen:
- EP-A- 0 897 107
- DE-A- 2 023 015
- FR-A- 2 696 234
- US-A- 4 404 849
- US-A- 6 119 514

## Beschreibung

Die Erfindung betrifft ein Verfahren zur Luftdruckkontrolle von luftbereiften Fahrzeugrädern während des
Laufs auf Sitzoptimierungsmaschinen oder Prüfständen, wobei das Fahrzeugrad relativ zu einer Lauftrommel verfahren wird.

Prüfstände für luftbereifte Fahrzeugräder sind in unterschiedlichen Ausführungsformen bekannt. Sie dienen dazu, luftbereifte Fahrzeugräder nicht nur unter betriebsnahen, sondern oftmals auch erheblich darüber hinaus gesteigerten Bedingungen bis an ihre Belastungsgrenze zu prüfen.

Sitzoptimierungsmaschinen für Fahrzeugräder werden in der Automobilproduktion dafür eingesetzt, an allen Fahrzeugrädern vor der Montage durch das Abrollen unter Last und auch im Schräglauf die Luftreifen in ihren richtigen Sitz auf der Felge zu bringen. Wenn dies erst nach der Montage des Fahrzeugrades im Betrieb des Kraftfahrzeugs erfolgen würde, so würde hierbei eine Unwucht am Fahrzeugrad entstehen, die nur durch ein nochmaliges, späteres Auswuchten beseitigt werden kann.

Das Befüllen eines Luftreifens erfolgt bei der Montage auf der Felge mittels einer Füllglocke. Eine Luftdruckkontrolle ist hierbei in den meisten Fällen nur über das Reifenventil möglich und wäre bei der Fahrzeugmontage mit einem erheblichen Arbeitsaufwand verbunden. Daher besteht die Gefahr, dass ein Fahrzeugrad mit unzureichender Luftdruck montiert wird.

Daraus ergibt sich ein Bedürfnis, eine Luftdruckkontrolle des Fahrzeugrades bereits auf der Sitzoptimierungsmaschine durchzuführen. Zwar sind unterschiedliche Techniken zur Luftdruckkontrolle an laufenden Fahrzeugrädern bekannt, beispielsweise durch eine an das Reifenventil angeschlossene Luftdruckmesseinrichtung mit drahtloser Übertragung zu einem Kontrollgerät. Da solche Techniken aber nur bei wenigen Fahrzeugrädern eingesetzt werden, kann diese Technik nicht zur laufenden Luftdruckkontrolle aller Fahrzeugräder auf der Sitzoptimierungsmaschine eingesetzt werden.

Die Einzelkontrolle über das Reifenventil ist mit erheblichem Arbeitsaufwand verbunden.

Auch bei Prüfständen für luftbereifte Fahrzeugräder besteht ein Bedürfnis, den Reifenluftdruck auch während des Prüfvorgangs zu kontrollieren.

Aufgabe der Erfindung ist es daher, ein Verfahren zur Luftdruckkontrolle von luftbereiften Fahrzeugrädern der eingangs genannten Gattung anzugeben, das in einfacher Weise durchgeführt werden kann und insbesondere den Arbeitsaufwand beim Betrieb von Sitzoptimierungsmaschinen oder Prüfständen nicht erhöht.

Diese Aufgabe wird erfindungsgemäß dadurch gelöst, dass die Anpresskraft gemessen wird, dass die Relativposition zwischen dem Fahrzeugrad und der Lauftrommel bestimmt wird und dass aus der Anpresskraft und der Relativposition aus einer für den jeweiligen Reifentyp des Fahrzeugrades gespeicherten Kennlinie der Reifenluftdruck bestimmt wird.

Nachdem für jeden vorkommenden Reifentyp durch eine Testreihe eine Kennlinie ermittelt und abgespeichert wurde, die den Zusammenhang zwischen dem Reifenluftdruck, der Anpresskraft und der Relativposition des Fahrzeugrades in Bezug auf die Lauftrommel darstellt, kann für alle Fahrzeugräder mit gleichem Reifentyp allein aus der jeweiligen Anpresskraft und der Relativposition unter Verwendung dieser Kennlinie auf den Luftdruck im Fahrzeugreifen geschlossen werden. Auf eine direkte Luftdruckmessung im Fahrzeugreifen, die mit erheblichem zusätzlichem Arbeitsaufwand verbunden wäre, kann daher vollständig verzichtet werden.

Auf diese Weise wird nicht nur sichergestellt, dass alle am Kraftfahrzeug montierten Fahrzeugräder den richtigen, vorgeschriebenen Luftdruck aufweisen; es wird auch sichergestellt, dass unzureichend gefüllte Reifen durch den Lauf auf der Sitzoptimierungsmaschine oder dem Prüfstand nicht beschädigt werden.

Zweckmäßigerweise wird eine Wegmessung bei der Annäherung des Fahrzeugrades an die Lauftrommel durchgeführt, um einen definierten Ausgangspunkt für die weitere, der Luftdruckkontrolle dienende Wegmessung zu erhalten.

Ausgehend von einer bekannten Sitzoptimierungsmaschine für luftbereifte Fahrzeugräder mit einer Lauftrommel und einer drehbaren Aufnahmespindel für das Fahrzeugrad, die mittels einer Vorschubeinrichtung relativ zueinander verfahrbar sind, ist eine erfindungsgemäße Sitzoptimierungsmaschine zur Durchführung des Verfahrens dadurch gekennzeichnet, dass eine die Anpresskraft des Fahrzeugrades bestimmende Kraftmesseinrichtung und ein die Relativposition der Lauftrommel zur Aufnahmespindel bestimmende Wegmesseinrichtung vorgesehen sind und dass die Kraftmesseinrichtung und die Wegmesseinrichtung mit einer Auswerteschaltung verbunden sind, die einen Kennlinienspeicher aufweist.

Diese Sitzoptimierungsmaschine weist gegenüber einer herkömmlichen, nicht zur Luftdruckkontrolle geeigneten Ausführung nur wenige zusätzliche Bauteile und Einrichtungen auf. An der Maschine selbst sind zusätzlich nur die Kraftmesseinrichtung und die Wegmesseinrichtung erforderlich, um die Relativposition zwischen der Lauftrommel und der Aufnahmespindel für das Fahrzeugrad zu bestimmen. Die übrigen erforderlichen Änderungen sind auf die Auswerteschaltung bzw. das die Auswerteschaltung steuernde Rechnerprogramm beschränkt.

Besondere Bedeutung erlangt das erfindungsgemäße Verfahren bei modernen, zunehmend eingesetzten Fahrzeugrädern mit Notlaufeigenschaften. Hierbei werden beispielsweise entweder Luftreifen mit verstärkten Seitenwänden oder mit innen liegenden Stützrädern verwendet. Alle diese Maßnahmen haben zur Folge, dass ein Luftdruckverlust sich nicht oder wenig auf das Verhalten des Fahrzeugrades auswirkt. Deshalb führen diese Maßnahmen aber auch dazu, dass bei solchen Fahrzeugrädern mit Notlaufeigenschaften ein unzureichender Luftdruck auch bei der üblichen Sitzoptimierung nicht sicher bemerkt wird. Die nach dem erfindungsgemäßen Verfahren durchgeführte Luftdruckkontrolle stellt einen solchen Fehler aber mit Sicherheit fest.

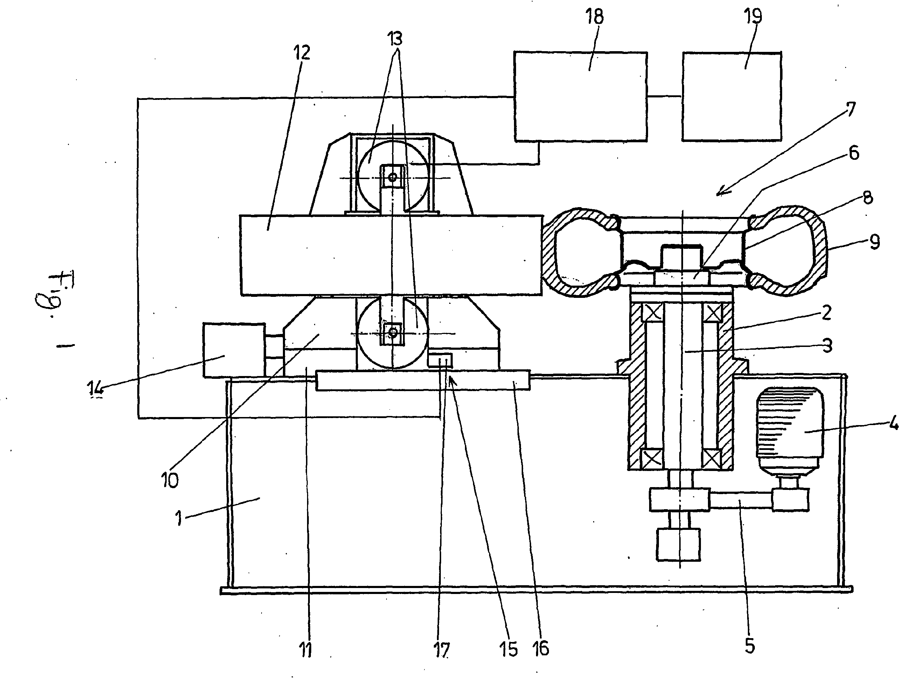

Nachfolgend wird ein Ausführungsbeispiel der Erfindung anhand der Zeichnung näher erläutert.

Die Zeichnung zeigt in vereinfachter Darstellungsweise und teilweise im Schnitt eine Sitzoptimierungsmaschine für luftbereifte Fahrzeugräder. An einem Maschinengestellt 1 ist eine Spindellagerung 2 für eine Aufnahmespindel 3 angeordnet, die von einem Elektromotor über einen Riementrieb 5 antreibbar ist.

Die senkrechte Aufnahmespindel 3 weist an ihrem oberen Ende einen Aufnahmeflansch 6 auf, der zur Anbringung eines zu prüfenden luftbereiften Fahrzeugrades 7 dient. Das Fahrzeugrad weist eine Felge 8 auf, die einen herkömmlichen Luftreifen 9 trägt.

Am Maschinengestell 1 ist ein Schlitten 10 in Schlittenführungen 11 relativ zu der Aufnahmespindel 3 verfahrbar. Im Schlitten 10 ist eine Lauftrommel 12 mit senkrechter Drehachse drehbar gelagert, die sich über Kraftmesseinrichtungen, beispielsweise Kraftmesszellen 13 am Schlitten 10 abstützt. Beim Prüfbetrieb rollt der Luftreifen 9 an der Außenfläche der Lauftrommel 12 ab.

Der Schlitten 10 wird durch eine Vorschubeinrichtung 14, beispielsweise einen Hydraulikzylinder oder einen Spindeltrieb, gegen das Fahrzeugrad 7 verfahren. Eine Wegmesseinrichtung 15 weist beim dargestellten Ausführungsbeispiel einen am Maschinenbett 1 angebrachten Längenmaßstab auf, der mittels eines Messkopfes 17 am Schlitten 10 abgetastet wird. Damit wird die jeweilige Position des Schlittens 10 und somit die Relativposition gegenüber der Aufnahmespindel 3 bestimmt.

Mittels der Kraftmesseinrichtung 13 wird die auf das Fahrzeugrad 7 wirkende Anpresskraft der Lauftrommel 12 gemessen. Das Messsignal wird einer Auswerteschaltung 18 zugeführt.

Gleichzeitig wird die Relativposition der Lauftrommel 12 zur Aufnahmespindel 3 durch die Wegmesseinrichtung 15 ermittelt. Das Messsignal wird ebenfalls der Auswerteschaltung 18 zugeführt.

In einem Kennlinienspeicher 19 wurden für alle vorkommenden Reifentypen Kennlinien gespeichert, die in Testreihen ermittelt wurden und die jeweils den Zusammenhang zwischen der Anpresskraft, der Relativposition und dem Reifenluftdruck darstellen. In der Auswerteschaltung 18 wird aus der für den jeweiligen Luftreifen zutreffenden Kennlinie unter Verwendung der ermittelten Anpresskraft und der Relativposition der Reifenluftdruck ermittelt. Liegt der Reifenluftdruck innerhalb der vorgegebenen Toleranz, so wird der Abrollvorgang weiter durchgeführt. Wird eine Abweichung des Luftdrucks festgestellt, so wird der Abrollvorgang unterbrochen. Der Luftreifen 9 wird entweder auf den vorgegebenen Luftdruck gebracht oder wegen sonstiger festgestellter Mängel verworfen.

## Patentansprüche

1. Verfahren zur Luftdruckkontrolle von luftbereiften Fahrzeugrädern während des Laufs auf Sitzoptimierungsmaschinen oder Prüfständen, wobei das Fahrzeugrad relativ zu einer Lauftrommel verfahren wird, **dadurch gekennzeichnet, dass** die Anpresskraft gemessen wird, dass die Relativposition zwischen dem Fahrzeugrad (7) und der Lauftrommel (12) bestimmt wird und dass aus der Anpresskraft und der Relativposition aus einer für den jeweiligen Reifentyp des Fahrzeugrades (7) gespeicherten Kennlinie der Reifenluftdruck bestimmt wird.

2. Verfahren nach Anspruch 1, **dadurch gekennzeichnet, dass** eine Wegmessung bei der Annäherung des Fahrzeugrades (7) an die Lauftrommel (12) durchgeführt wird.

3. Sitzoptimierungsmaschine für luftbereifte Fahrzeugräder mit einer Lauftrommel und einer drehbaren Aufnahmespindel für das Fahrzeugrad, die mittels einer Vorschubeinrichtung relativ zueinander verfahrbar sind, zur Durchführung des Verfahrens nach Anspruch 1 oder 2, **dadurch gekennzeichnet, dass** eine Kraftmesseinrichtung zur Bestimmung der Anpresskraft und eine die Relativposition der Lauftrommel (12) zur Aufnahmespindel (3) bestimmende Wegmesseinrichtung (15) vorgesehen sind und dass die Kraftmesseinrichtung (13) und die Wegmesseinrichtung (15) mit einer Auswerteschaltung (18) verbunden sind, die mit einem Kennlinienspeicher (19) verbunden ist.

4. Prüfstand für luftbereifte Fahrzeugräder mit einer Lauftrommel und einer drehbaren Aufnahmespindel für das zu prüfende Fahrzeugrad, die mittels einer Vorschubeinrichtung relativ zueinander verfahrbar sind, mit einer die Anpresskraft des Fahrzeugrades bestimmenden Kraftmesseinrichtung, zur Durchführung des Verfahrens nach Anspruch 1 oder 2, **dadurch gekennzeichnet, dass** eine die Relativposition der Lauftrommel zur Aufnahmespindel (3) bestimmende Wegmesseinrichtung vorgesehen ist und dass die Kraftmesseinrichtung und die Wegmesseinrichtung mit einer Auswerteschaltung verbunden sind, die mit einem Kennlinienspeicher verbunden ist.

## Claims

1. Method for checking the air pressure of vehicle wheels having pneumatic tyres during running on seat optimization machines or test stands, the vehicle wheel being moved in relation to a running drum, **characterized in that** the pressure force is measured, **in that** the relative position between the vehicle wheel (7) and the running drum (12) is determined, and **in that**, from the pressure force and the relative position, the tyre air pressure is determined from a characteristic curve stored for the respective tyre type of the vehicle wheel (7).

2. Method according to Claim 1, **characterized in that** displacement measurement is carried out during the approach of the vehicle wheel (7) to the running drum (12).

3. Seat optimization machine for vehicle wheels having pneumatic tyres, with a running drum and with a rotatable reception spindle for the vehicle wheel, said running drum and reception spindle being movable in relation to one another by means of a feed device, for carrying out the method according to Claim 1 or 2, **characterized in that** a force measurement device for determining the pressure force and a displacement measurement device (15) which determines the relative position of the running drum (12) with respect to the reception spindle (3) are provided, and **in that** the force measurement device (13) and the displacement measurement device (15) are connected to an evaluation circuit (18) which is connected to a characteristic curve store (19).

4. Test stand for vehicle wheels having pneumatic tyres, with a running drum and with a rotatable reception spindle for the vehicle wheel to be tested, said running drum and reception spindle being movable in relation to one another by means of a feed device, with a force measurement device determining the pressure force of the vehicle wheel, for carrying out the method according to Claim 1 or 2, **characterized in that** a displacement measurement device which determines the relative position of the running drum with respect to the reception spindle (3) is provided, and **in that** the force measurement device and the displacement measurement device are connected to an evaluation circuit which is connected to a characteristic curve store.

## Revendications

1. Procédé pour le contrôle de la pression d'air de roues de véhicule gonflées à l'air pendant leur roulement sur des bancs d'essai ou des machines d'optimisation d'assise, la roue du véhicule se déplaçant relativement à un tambour de roulement, **caractérisé en ce que** la force de contact est mesurée, **en ce qu'**on détermine la position relative entre la roue du véhicule (7) et le tambour de roulement (12) et **en ce que** la pression de gonflage du pneu est déterminée à partir de la force de contact et de la position relative, grâce à une courbe caractéristique mémorisée pour chaque type de pneu correspondant de la roue du véhicule (7).

2. Procédé selon la revendication 1, **caractérisé en ce qu'**une mesure de déplacement est effectuée lors de l'approche de la roue du véhicule (7) par rapport au tambour de roulement (12).

3. Machine d'optimisation d'assise pour roues de véhicule gonflées à l'air, avec un tambour de roulement et un axe d'entraînement rotatif pour la roue du véhicule, lesquels peuvent se déplacer relativement l'un par rapport à l'autre au moyen d'un dispositif d'avance, afin d'effectuer le procédé selon la revendication 1 ou 2, **caractérisée en ce qu'**on a prévu un dispositif de mesure de force pour déterminer la force de contact et un dispositif de mesure de déplacement (15) déterminant la position relative du tambour de roulement (12) par rapport à l'axe d'entraînement (3) et **en ce que** le dispositif de mesure de force (13) et le dispositif de mesure de déplacement (15) sont raccordés à un circuit d'évaluation (18), lequel est raccordé à une mémoire de courbe caractéristique (19).

4. Banc d'essai pour roues de véhicule gonflées à l'air, avec un tambour de roulement et un axe d'entraînement rotatif pour la roue du véhicule à tester, lesquels peuvent se déplacer relativement l'un par rapport à l'autre au moyen d'un dispositif d'avance, avec un dispositif de mesure de force déterminant la force de contact de la roue du véhicule, afin d'effectuer le procédé selon la revendication 1 ou 2, **caractérisé en ce qu'**on a prévu un dispositif de mesure de déplacement déterminant la position relative du tambour de roulement par rapport à l'axe d'entraînement (3) et **en ce que** le dispositif de mesure de force et le dispositif de mesure de déplacement sont raccordés à un circuit d'évaluation, lequel est raccordé à une mémoire de courbe caractéristique.
